# EUROPEAN PATENT SPECIFICATION

(11) **EP 3 039 999 B1**
(45) Date of publication and mention of the grant of the patent: **28.03.2018**
(21) Application number: 15202364.4
(22) Date of filing: 23.12.2015
(51) Int. Cl.: A47J 31/44

(54) **APPARATUS AND METHOD FOR DISPENSING FOAMED OR NON-FOAMED MILK**
VORRICHTUNG UND VERFAHREN ZUR AUSGABE VON GESCHÄUMTER ODER NICHT GESCHÄUMTER MILCH
APPAREIL ET PROCÉDÉ DE DISTRIBUTION DE LAIT EXPANSÉ OU NON-EXPANSÉ

(30) Priority: 05.01.2015 IT MI20150002
(43) Date of publication of application: 06.07.2016
(73) Proprietor: Gruppo Cimbali S.p.A., 20082 Binasco (MI) (IT)
(72) Inventor: QUARATESI, Guido, 20082 Binasco (MI) (IT); COMOTTI, Nicholas, 20082 Binasco (MI) (IT)
(74) Representative: Perani & Partners S.p.A.

(56) References cited:
- EP-A2- 2 397 219
- WO-A1-2008/083941
- DE-A1-102011 102 734
- US-A- 5 211 371

## Description

The present invention refers to an apparatus for dispensing milk, foamed or non-foamed, with different foaming values, through suction of air from the outside and suction of milk from a container, comprising a container for the milk, an air intake open towards the outside, a suction pump, an electric motor for actuating it, a first duct connecting said air intake with said suction pump, a second duct dipping into said container for the milk and joined to said first duct upstream of the point at which said first duct is connected to said pump, a third duct connected to the delivery of the pump and ending with a dispensing point, a central processing unit (CPU) for controlling, based on a predetermined programme, the operating parameters at least of the electric motor of said pump.

The same invention, in accordance with a particular embodiment thereof, refers to an apparatus, for dispensing hot milk as well as cold, foamed or non-foamed, with different foaming values, said apparatus also including a heating device inserted in said third duct.

In particular, the heater is a steam heater and the apparatus, in this case, also comprises a steam generator, a fourth duct connecting the steam generator to said heating device to supply heating steam to said heating device through an on-off valve inserted in said fourth duct, to open and close said fourth duct, the actuation of said on-off valve being controlled by said central processing unit (CPU).

Apparatuses of the type indicated above are known and have a particular and specific application in the field of espresso coffee machines, particularly professional ones, for bars, restaurants and various kinds of community.

Since, as known, the consumption of milk and of drinks created from it is particularly high, making apparatuses that can produce such drinks, in association with espresso coffee machines, or even as autonomous structures, is of substantial commercial importance.

However, making them presents numerous difficulties connected with the high variability of the drinks to be dispensed. Indeed, they can be dispensed with cold milk or with heated milk, as well as with foamed milk having different foaming values, either cold or hot and in the latter case also at different temperatures.

In order to be able to vary the foaming value of the milk, both when it is used cold or intended for heating after foaming, known apparatuses foresee, on the air suction duct, an intermittently operating valve that, under the control of a central processing unit, is opened and closed intermittently between an open state thereof that allows a high air flow and a state that allows a low air flow. An example of application of an intermittently operating valve arranged on the air suction duct is described in EP-2.275.010-A1. The suction of air through the intermittently operating valve described in EP 2.275.010 is obtained through the Venturi effect determined by a flow of steam that conveys it in a foaming chamber to which the flow of milk to be foamed is also taken, the latter being sucked from the tank through a pump.

With the apparatus described in EP 2.275.010 it is not possible to carry out the foaming of milk in cold state, given the essential presence of steam for the suction of air.

Moreover, the apparatus described in EP 2.275.010 does not foresee to vary the suction opening of the air valve with continuity from a totally closed condition to a predetermined maximum open condition with continuity from any intermediate open position: With such an apparatus it is thus not possible to obtain a non-pulsed air flow having a predetermined value that can also be kept as such for a determined time period and then possibly changed to a different value, all also during the time period of one same dispensing of the drink.

Apparatuses are also known in which adjustment of the air flow rate is carried out through the manual actuation of a ring nut that open or closes the sucked air passage to a greater or lesser extent.

According to such a prior art, described for example in EP-A-0 485.350 therefore, although a continuous adjustment of the sucked air flow is foreseen to carry out the foaming of the milk, it is an adjustment, even fine, that does nevertheless need to be carried out manually by a technical expert, each time, to achieve a certain calibration of the apparatus to produce a certain milk foam.

In accordance with the aforementioned prior art, it is not therefore possible to change the degree of foaming of the milk during one same dispensing in order to dispense, into the drink collection container, for example, a plurality of juxtaposed layers of foamed milk with different density from one layer to the other that represents a type of milk-based drink that is very popular.

Moreover, again in accordance with the prior art, it is not practically feasible, with an apparatus provided with a manually-adjusted flow rate regulator, to carry out the dispensing of a drink with cold foamed milk, having a good quality foam, and then immediately proceed to dispense a drink with hot foamed milk since, for the same amount of milk, the air flow rate to produce a good quality foam in hot conditions is different from that needed to obtain the same quality of foam with milk in cold conditions.

The need to intervene manually on the adjustment ring nut of the device makes it practically impossible to go from one type of drink to another to satisfy the needs of customers within acceptable time periods, even if the bartender is able to intervene on the adjustment mechanism, unless the apparatus comprises a plurality of air suction ducts with as many respective valve devices each calibrated with an opening such as to allow a particular air flow and controlled by the central processing unit (CPU) of the apparatus.

Document DE 10 2011 102734 A1 is also known, and discloses a device for frothing a liquid, in particular cold and / or non-heated milk. This device is provided with a liquid supply line for supplying the liquid. An air supply line opens into the liquid supply line for supplying air into the liquid. A discharge line is attached to the liquid line downstream of the opening of the air supply line for discharging the mixture of liquid and air. A first conveying unit, namely a pump, is provided for conveying the liquid through the liquid supply line and/or the mixture through the discharge line. A mixing unit is provided downstream of the opening in the discharge line.

In DE 10 2011 102734 A1 the air flow is set from an outside source, therefore there is no need to measure it.

The purpose of the present invention is therefore to solve the problem of adjusting the flow rate of the air sucked into an apparatus for dispensing foamed milk-based drinks, making it able to be carried out, automatically, upon the operator's request and able to be carried out even in the time period of one same dispensing of drink without needing a plurality of suction ducts with as many differently calibrated valves.

Moreover, another purpose of the invention is to make it possible to go from dispensing foamed milk in cold state to dispensing with hot foamed milk and vice-versa, with the relative adjustment of the air flow rate sucked so as to be able to achieve the desired consistency of the foam irrespective of the temperature of the milk

Finally, the last but not least purpose of the invention is to offer a method for dispensing foamed milk with different foaming consistencies in a single drink dispensing.

This and other purposes that will become clearer in the rest of the description are obtained by an apparatus characterised in accordance with the following claim 1.

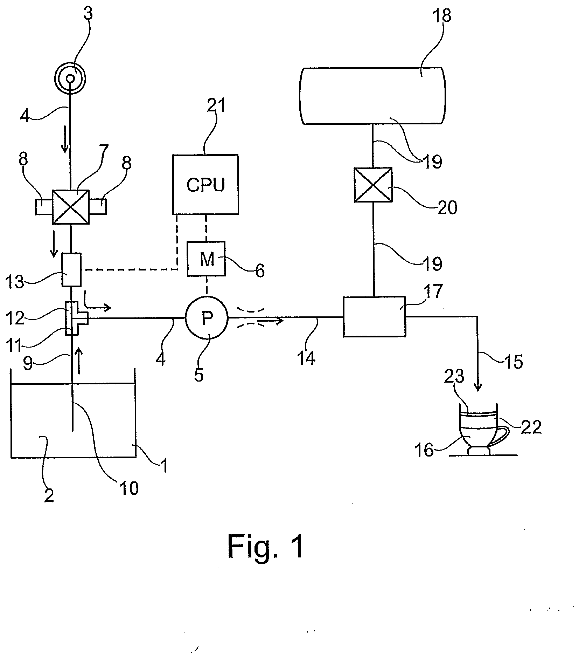

The invention will now be described with reference to the attached drawing in which the single figure 1 schematically illustrates the components of the apparatus and their mutual hydraulic and electric connections.

With reference to the aforementioned figure, reference numeral 1 indicates a container in which an amount of milk, indicated with 2, is arranged for producing milk-based drinks, both cold and hot, with or without foam.

In accordance with a first embodiment, the apparatus comprises an air intake 3 open towards the outside in which the apparatus is intended to operate. A first duct, indicated with 4, connects said air intake with a suction pump 5, for example of the geared type, actuated by a relative electric motor 6 that can also be of the type that has a variable speed.

In said first duct 4 a continuous flow rate regulator 7 is inserted, the actuator of which, for example of the electromagnetic type, is schematically indicated with 8. In accordance with a possible embodiment thereof, the continuous flow rate regulator 7 consists of a proportional valve the actuator of which takes care of actuating it, making it pass with continuity from one position, for example closed, to any open position and vice-versa, through intermediate positions comprised in the field of operation of the valve with the possibility of maintaining a given position for a programmed time.

In accordance with a different embodiment, the continuous flow rate regulator 7 consists of a valve with actuator made from shape memory alloy (SMA).

A second hydraulic duct 9, with its open end 10, inserted in the container 1, dips into the amount of milk 2 and connects with its end 11 to the first duct 4 through a joining point 12.

In accordance with the invention, between the device for continuously adjusting the flow rate 7 and the joining point 12 between the first and the second duct, it is inserted a flow sensor, schematically indicated with 13, in the duct 4.

The pump 5 is connected, with its delivery, to a third duct 14 that ends with a milk delivery end or point 15 above a conventional recipient 16 for collecting the drink.

In accordance with a second embodiment of the invention, the apparatus, also comprises a heater 17 provided with means for activating and deactivating it, inserted in said duct 14.

In particular, the heater 17 is a steam heater connected to a steam generator 18 through a duct 19 in which an electric on-off valve 20 is inserted, to close and open said duct and thus interrupt or allow the flow of steam to reach the heater 17.

The apparatus, both in its first embodiment and in the second, finally comprises a central processing unit (CPU) 21 for controlling, based on a predetermined programme, the actuation of the electric motor 6 of said pump 5 and possibly the speed thereof.

The same central processing unit 21 also controls the actuation of the on-off valve 20 of the steam duct 19 as well as the actuation of the actuator 8 of the continuous regulator device 7 of the flow rate of the air that, sucked by the pump 5, flows in the first duct 4 and mixes with the flow of milk sucked by the same pump 5 through the second duct 9 outside of the container 1.

The flow sensor 13 is also connected to the central processing unit 21 that takes care of receiving and processing the data received from it.

With the apparatus according to the invention in its first embodiment foamed cold milk-based drinks having different foam consistencies can be prepared thanks to the possibility of continuously varying the opening of the air flow regulator valve 7. Such adjustment can be determined by the operator by selecting a suitable programme managed by the central processing unit 21 and possibly also controlled through the responses that it receives concerning the actual air flow rate verified through the flow sensor 13, if this is present in the circuit.

The apparatus according to the invention also makes it possible to dispense, in the time period of a single dispensing, amounts of foamed milk with different foam consistencies or densities, forming many juxtaposed layers of foamed milk like those schematically indicated with 22 and 23 in the drawing of Figure 1 in the container 16 for collecting the drink.

With reference to the second embodiment, the apparatus according to the invention, also comprising a heater 17 on the drink dispensing duct 14, allows foamed milk to be prepared, in heated conditions by adjusting, through a programme selection in the central processing unit 21, the sucked air flow by intervening on the opening of the continuous regulation valve 7.

From what has been described and illustrated above the present invention makes it possible to carry out a method for dispensing foamed milk with different foaming consistencies in a single drink dispensing that comprises:
- suction of air from the outside into an air duct (4) through an air intake (3) open towards the outside;
- suction of milk from a container (1) along a suction duct (9) by means of a suction pump (5) actuated by an electric motor (6), wherein the suction duct is joined to the air duct upstream of the pump through a joining point (11) so that a mixture of air and milk is introduced into the pump;
- dispensing of foamed milk along an outlet duct (14) connected to the delivery of the pump (5) and ending with a milk dispensing outlet (15) for a dispensing time;
- adjustment of the flow rate of air introduced into the suction duct during the single dispensing of the drink through a flow rate regulator (7) inserted into the air duct (4) between the air intake (3) and the joining point (11) and actuated by an electronic actuator (8) connected to a central processing unit (21) to vary the air flow rate,
wherein the adjustment of the air flow rate comprises the actuation of the pump and, by controlling the electronic actuator of the air flow rate regulator, the dispensing of foamed milk at a first air flow rate value for a first time period and at a second air flow rate value, different from the first air flow rate value, for a second time period, after the first time period, wherein the first and the second time period are comprised in the dispensing time, so as to obtain a drink of foamed milk having different consistencies. According to the invention, the method also comprises the measurement of the flow rate of the air flow along an air duct through a flow measurer (13) connected to the control unit (21) that receives measured flow rate values.

## Claims

1. Apparatus for dispensing foamed or non-foamed milk with different foaming values, through suction of air from the outside and suction of milk from a container, comprising a container (1) for the milk (2), an air intake (3) open towards the outside, a suction pump (5), an electric motor (6) for actuating it, a first duct (4) connecting said air intake (3) with said suction pump (5), a second duct (9) dipping into said container (1) for the milk and joined to said first duct (4) upstream of the point at which said first duct is connected to said pump (5), a third duct (14) connected to the delivery of the pump (5) and ending with a milk dispensing point (15), a central processing unit (CPU) (21) for controlling, based on a predetermined programme, the operating parameters at least of the electric motor (6) of said pump (5), a continuous flow rate regulator (7) inserted into said first duct (4) between the air intake (3) and the point (12) at which said second duct (9) joins to the first, said continuous flow rate regulator (7) having the relative actuator member (8) connected to said central processing unit (CPU) (21) to control it; **characterised in that** it comprises a flow measuring sensor (13) inserted in said first duct (4) coming from the air intake (3), in the section comprised between said continuous flow rate regulator (7) and the point (12) at which said second duct (9) joins with said first duct (4), said flow measuring sensor (13) being connected to said controlling central processing unit (CPU) (21) to send the measured flow values to it.

2. Apparatus according to claim 1 **characterised in that** said continuous flow rate regulator (7) is a proportional solenoid valve.

3. Apparatus according to claim 1, **characterised in that** said continuous flow rate regulator (7) comprises an actuator made from shape memory alloy.

4. Apparatus according to any one of claims 1 to 3, wherein said electric motor (6) for actuating said pump (5) has a variable speed.

5. Apparatus according to any one of claims 1 to 4, **characterised in that** it includes a heating device (17) inserted in said third duct (14), said heater being provided with means for activating and deactivating it.

6. Apparatus according to claim 5, **characterised in that** said heating device (17) is a steam heater and includes a steam generator (18), a fourth duct (19) connecting the steam generator (18) with said heating device (17), for supplying heating steam to said heating device (17), an on-off valve (20) inserted in said fourth duct (19) to open and close said fourth duct (19), said on-off valve (20) being controlled by said central processing unit (CPU) (21).

7. Method for dispensing foamed milk with different foaming consistencies in a single drink dispensing, comprising:
- suction of air from the outside into an air duct (4) through an air intake (3) open towards the outside;
- suction of milk from a container (1) along a suction duct (9) by means of a suction pump (5) actuated by an electric motor (6), wherein the suction duct is joined to the air duct upstream of the pump through a joining point (11) so that a mixture of air and milk is introduced into the pump;
- dispensing of foamed milk along an outlet duct (14) connected to the delivery of the pump (5) and ending with a milk dispensing outlet (15) for a dispensing time;
- adjustment of the flow rate of air introduced into the suction duct during the single dispensing of the drink through a flow rate regulator (7) inserted into the air duct (4) between the air intake (3) and the joining point (11) and actuated by an electronic actuator (8) connected to a central processing unit (21) to vary the air flow rate,
wherein the adjustment of the air flow rate comprises the actuation of the pump and, by controlling the electronic actuator of the air flow rate regulator, the dispensing of foamed milk at a first air flow rate value for a first time period and at a second air flow rate value, different from the first air flow rate value, for a second time period, after the first time period, wherein the first and the second time period are comprised in the dispensing time, so as to obtain a drink of foamed milk having different consistencies; **characterized in that** it comprises the measurement of the flow rate of the air flow along the air duct through a flow measurer (12) connected to the central control unit (21) that receives measured flow rate values.

8. Method according to claim 7, wherein the motor (6) of the pump (5) is controlled by the control unit (21).

9. Method according to claim 7 or 8, wherein the dispensing of the drink is controlled by the control unit in accordance with a predetermined programme in which the dispensing time is divided into a plurality of successive time periods, each time period corresponding to a respective air flow rate value.

10. Method according to one of claims 7 to 9, also comprising heating the foamed milk by passing the milk - air mixture through a heater (17) arranged along the outlet duct.

## Patentansprüche

1. Vorrichtung zum Ausgeben aufgeschäumter oder nicht aufgeschäumter Milch mit unterschiedlichen Aufschäumungswerten durch Ansaugen von Luft von außerhalb und Ansaugen von Milch aus einem Behälter, umfassend einen Behälter (1) für die Milch (2), einen Lufteinlass (3), der nach außerhalb hin offen ist, eine Saugpumpe (5), einen Elektromotor (6), um selbige zu betätigen, eine erste Leitung (4), die den Lufteinlass (3) mit der Saugpumpe (5) verbindet, eine zweite Leitung (9), die in den Behälter (1) für die Milch eintaucht und prozessaufwärts des Punktes, an dem die erste Leitung mit der Pumpe (5) verbunden ist, mit der ersten Leitung (4) gekoppelt ist, eine dritte Leitung (14), die mit der Zufuhr der Pumpe (5) verbunden ist und in einem Milchausgabepunkt (15) endet, eine zentrale Recheneinheit (CPU) (21) zum Steuern der Betriebsparameter von zumindest dem Elektromotor (6) der Pumpe (5), basierend auf einem festgelegten Programm, einen Regler (7) für eine kontinuierliche Durchflussmenge, der zwischen dem Lufteinlass (3) und dem Punkt (12), an dem die zweite Leitung (9) an die erste gekoppelt ist, in die erste Leitung (4) eingesetzt ist, wobei der Regler (7) für eine kontinuierliche Durchflussmenge das relative Betätigungselement (8) aufweist, das zwecks seiner Steuerung mit der zentralen Recheneinheit (CPU) (21) verbunden ist; **dadurch gekennzeichnet, dass** sie einen Durchfluss-Messsensor (13) umfasst, der in dem Abschnitt, der zwischen dem Regler (7) für eine kontinuierliche Durchflussmenge und dem Punkt (12), an dem die zweite Leitung (9) an die erste Leitung (4) gekoppelt ist, in die erste Leitung (4) eingesetzt ist, die vom Lufteinlass (3) kommt, wobei der Durchfluss-Messsensor (13) mit der steuernden zentralen Recheneinheit (CPU) (21) verbunden ist, um ihr die gemessenen Durchflusswerte zu senden.

2. Vorrichtung nach Anspruch 1, **dadurch gekennzeichnet, dass** der Regler (7) für eine kontinuierliche Durchflussmenge ein Proportionalmagnetventil ist.

3. Vorrichtung nach Anspruch 1, **dadurch gekennzeichnet, dass** der Regler (7) für eine kontinuierliche Durchflussmenge ein Betätigungselement umfasst, das aus einer Formgedächtnislegierung besteht.

4. Vorrichtung nach einem der Ansprüche 1 bis 3, wobei der Elektromotor (6) zum Betätigen der Pumpe (5) eine variable Drehzahl aufweist.

5. Vorrichtung nach einem der Ansprüche 1 bis 4, **dadurch gekennzeichnet, dass** sie eine Heizeinrichtung (17) umfasst, die in die dritte Leitung (14) eingesetzt ist, wobei die Heizeinrichtung mit Mitteln für ihr Ein-und Ausschalten versehen ist.

6. Vorrichtung nach Anspruch 5, **dadurch gekennzeichnet, dass** die Heizeinrichtung (17) eine Dampfheizeinrichtung ist und einen Dampfgenerator (18), eine vierte Leitung (19), die den Dampfgenerator (18) mit der Heizeinrichtung (17) verbindet, um der Heizeinrichtung (17) Heizdampf zuzuführen, und ein Einschaltventil (20) beinhaltet, das in die vierte Leitung (19) eingesetzt ist, um die vierte Leitung (19) zu öffnen und zu schließen, wobei das Einschaltventil (20) durch die zentrale Recheneinheit (CPU) (21) gesteuert wird.

7. Verfahren zum Ausgeben aufgeschäumter Milch mit unterschiedlichen Aufschäumungskonsistenzen bei einer Einzelgetränkeausgabe, umfassend:
- Ansaugen von Luft von außerhalb in eine Luftleitung (4) durch einen Lufteinlass (3), der nach außerhalb hin offen ist;
- Ansaugen von Milch aus einem Behälter (1) durch eine Saugleitung (9) mit Hilfe einer Saugpumpe (5), die durch einen Elektromotor (6) betätigt wird, wobei die Saugleitung prozessaufwärts der Pumpe an einem Kopplungspunkt (11) derart mit der Luftleitung verbunden ist, dass eine Mischung aus Luft und Milch in die Pumpe eingeführt wird;
- Ausgeben aufgeschäumter Milch während eines Ausgabezeitraumes durch eine Auslassleitung (14), die mit der Zufuhr der Pumpe (5) verbunden ist und in einem Milchausgabeauslass (15) endet;
- Einstellen der Durchflussmenge von Luft, die während der Einzelausgabe des Getränks in die Saugleitung eingeführt wird, durch einen Durchflussmengenregler (7), der zwischen dem Lufteinlass (3) und dem Kopplungspunkt (11) in die Luftleitung (4) eingesetzt ist und durch ein elektronisches Betätigungselement (8) betätigt wird, das mit einer zentralen Recheneinheit (21) verbunden ist, um die Luftdurchflussmenge zu variieren, wobei das Einstellen der Luftdurchflussmenge das Betätigen der Pumpe und durch Steuern des elektronischen Betätigungselements des Luftdurchflussmengenreglers das Ausgeben aufgeschäumter Milch mit einem ersten Luftdurchflussmengenwert für eine erste Zeitspanne und einem zweiten Luftdurchflussmengenwert, der sich vom ersten Luftdurchflussmengenwert unterscheidet, für eine zweite Zeitspanne nach der ersten Zeitspanne umfasst, wobei die erste und die zweite Zeitspanne in dem Ausgabezeitraum enthalten sind, so dass ein Getränk aus aufgeschäumter Milch mit verschiedenen Konsistenzen erzielt wird; **dadurch gekennzeichnet, dass** es das Messen der Durchflussmenge der Luftdurchfluss durch die Luftleitung mittels eines Durchflussmessers (12) umfasst, der mit der zentralen Recheneinheit (21) verbunden ist, die gemessene Durchflussmengenwerte empfängt.

8. Verfahren nach Anspruch 7, wobei der Motor (6) der Pumpe (5) durch die Recheneinheit (21) gesteuert wird.

9. Verfahren nach Anspruch 7 oder 8, wobei das Ausgeben des Getränks durch die Recheneinheit gemäß einem festgelegten Programm gesteuert wird, in dem die Ausgabezeit in mehrere aufeinanderfolgende Zeitspannen aufgeteilt ist, wobei jede Zeitspanne einem entsprechenden Luftdurchflussmengenwert entspricht.

10. Verfahren nach einem der Ansprüche 7 bis 9, ferner umfassend das Erwärmen der aufgeschäumten Milch durch Hindurchleiten der Milch-Luft-Mischung durch eine Heizeinrichtung (17), die entlang der Auslassleitung angeordnet ist.

## Revendications

1. Appareil de distribution de lait moussé ou non moussé avec différentes valeurs de moussage, au moyen d'une aspiration d'air provenant de l'extérieur et d'une aspiration de lait à partir d'un récipient, comprenant un récipient (1) pour le lait (2), une prise d'air (3) ouverte vers l'extérieur, une pompe aspirante (5), un moteur électrique (6) pour l'actionner, un premier conduit (4) reliant ladite prise d'air (3) à ladite pompe aspirante (5), un deuxième conduit (9) plongeant dans ledit récipient (1) pour le lait et uni audit premier conduit (4) en amont du point au niveau duquel ledit premier conduit est connecté à ladite pompe (5), un troisième conduit (14) connecté au refoulement de la pompe (5) et se terminant par un point de distribution de lait (15), une unité centrale de traitement (CPU) (21) pour commander, sur la base d'un programme prédéterminé, les paramètres de fonctionnement au moins du moteur électrique (6) de ladite pompe (5), un régulateur de débit continu (7) inséré dans ledit premier conduit (4) entre la prise d'air (3) et le point (12) au niveau duquel ledit deuxième conduit (9) s'unit au premier, ledit régulateur de débit continu (7) ayant l'élément actionneur (8) correspondant connecté à ladite unité centrale de traitement (CPU) (21) pour le commander; **caractérisé en ce qu'**il comprend un capteur de mesure de débit (13) inséré dans ledit premier conduit (4) provenant de la prise d'air (3), dans la section comprise entre ledit régulateur de débit continu (7) et le point (12) au niveau duquel ledit deuxième conduit (9) s'unit audit premier conduit (4), ledit capteur de mesure de débit (13) étant connecté à ladite unité centrale de traitement de commande (CPU) (21) pour lui transmettre les valeurs de débit mesurées.

2. Appareil selon la revendication 1 **caractérisé en ce que** ledit régulateur de débit continu (7) est une électrovanne proportionnelle.

3. Appareil selon la revendication 1, **caractérisé en ce que** ledit régulateur de débit continu (7) comprend un actionneur réalisé en alliage à mémoire de forme.

4. Appareil selon l'une quelconque des revendications 1 à 3, dans lequel ledit moteur électrique (6) pour actionner ladite pompe (5) a une vitesse variable.

5. Appareil selon l'une quelconque des revendications 1 à 4, **caractérisé en ce qu'**il comprend un dispositif de chauffage (17) inséré dans ledit troisième conduit (14), ledit réchauffeur étant muni de moyens pour son activation et sa désactivation.

6. Appareil selon la revendication 5, **caractérisé en ce que** ledit dispositif de chauffage (17) est un réchauffeur à vapeur et comprend un générateur de vapeur (18), un quatrième conduit (19) reliant le générateur de vapeur (18) audit dispositif de chauffage (17), pour délivrer de la vapeur chauffante audit dispositif de chauffage (17), une vanne tout ou rien (20) insérée dans ledit quatrième conduit (19) pour ouvrir et fermer ledit quatrième conduit (19), ladite vanne tout ou rien (20) étant commandée par ladite unité centrale de traitement (CPU) (21).

7. Procédé pour distribuer du lait moussé avec différentes consistances de moussage dans un unique distributeur de boissons, comprenant :
- l'aspiration d'air à partir de l'extérieur dans un conduit d'air (4) à travers une prise d'air (3) ouverte vers l'extérieur ;
- l'aspiration de lait à partir d'un récipient (1) le long d'un conduit d'aspiration (9) au moyen d'une pompe aspirante (5) actionnée par un moteur électrique (6), dans lequel le conduit d'aspiration est uni au conduit d'air en amont de la pompe par le biais d'un point de jonction (11) de manière qu'un mélange d'air et de lait soit introduit dans la pompe ;
- la distribution de lait moussé le long d'un conduit de sortie (14) connecté au refoulement de la pompe (5) et se terminant par une sortie de distribution de lait (15) pendant un temps de distribution ;
- le réglage du débit d'air introduit dans le conduit d'aspiration durant la seule distribution de la boisson par le biais d'un régulateur de débit (7) inséré dans le conduit d'air (4) entre la prise d'air (3) et le point de jonction (11) et actionné par un actionneur électronique (8) connecté à une unité centrale de traitement (21) pour faire varier le débit d'air,
dans lequel le réglage du débit d'air comprend l'actionnement de la pompe et, en commandant l'actionneur électrique du régulateur de débit d'air, la distribution de lait moussé à une première valeur de débit d'air pendant une première période de temps et à une deuxième valeur de débit d'air, différente de la première valeur de débit d'air, pendant une deuxième période de temps, après la première période de temps, dans lequel les première et deuxième périodes de temps sont comprises dans le temps de distribution, de manière à obtenir une boisson de lait moussé ayant différentes consistances ; **caractérisé en ce qu'**il comprend la mesure du débit du flux d'air le long du conduit d'air par le biais d'un dispositif de mesure de débit (12) connecté à l'unité centrale de commande (21) qui reçoit les valeurs de débit mesurées.

8. Procédé selon la revendication 7, dans lequel le moteur (6) de la pompe (5) est commandé par l'unité de commande (21).

9. Procédé selon la revendication 7 or 8, dans lequel la distribution de la boisson est commandée par l'unité de commande en fonction d'un programme prédéterminé dans lequel le temps de distribution est divisé en une pluralité de périodes de temps successives, chaque période de temps correspondant à une valeur de débit d'air respective.

10. Procédé selon une des revendications 7 à 9, comprenant également le chauffage du lait moussé en faisant passer le mélange lait-air à travers un réchauffeur (17) agencé le long du conduit de sortie.
